# EUROPEAN PATENT APPLICATION

(11) **EP 2 987 981 A1**
(43) Date of publication of application: **24.02.2016**
(21) Application number: 15180915.9
(22) Date of filing: 13.08.2015
(51) Int. Cl.: F02B 23/06

(54) **ENGINE FOR USE IN A MACHINE**

(30) Priority: 19.08.2014 US 201414462785
(71) Applicant: Deere & Company, Moline, IL 61265-8098 (US)
(72) Inventor: Winsor, Richard E, Waterloo, IA Iowa 50701 (US); Cho, Nam Hyo, Cedar Falls, IA Iowa 50613 (US)
(74) Representative: Dehnhardt, Florian Christopher

(57) **Abstract**

An engine (104) for use in a machine comprises an engine block (108). A cylinder head (106) is mounted to the engine block (108). A combustion chamber (126) is formed at least partially by the cylinder head (106). A piston (112) is slidably disposed in the engine block (108) and configured to reciprocate therein, wherein the piston (112) comprises a bottom surface (152), an outer surface (150) and a sidewall (147). The sidewall (147) faces radially outward to mate with a cylinder (110) of the engine (104). The sidewall (147) contacts the outer surface (150), the bottom surface (152) and the outer surface (150) forming a portion of the combustion chamber (126). The bottom surface (152) comprises a convex region (154) being intersected by a longitudinal piston axis (118) defined by the piston (112), a concave region (156), and a circumferential edge (166). The convex region (154) is radially inward of and in contact with the concave region (156), the concave region (156) is radially inward of and in contact with the circumferential edge (166), and the circumferential edge (166) is radially inward of and in contact with the outer surface (150).

## Description

The present invention relates to an engine for use in a machine.

An engine includes an engine block, a cylinder head, a combustion chamber, and a piston. The piston is connected through a connecting rod to a crankshaft of the engine. Combustion events, in the combustion chamber, cause the piston to reciprocate along a rectilinear path within a cylinder. The combustion chamber is formed at an end of the cylinder, and is bound at a first end by the cylinder head and at a second end by a top of the piston. Known engines utilize various methods for increasing the combustion rate of the fuel, including swirl, fuel impact on surfaces, and multiple injections, to name just a few examples. Such methods result in unwanted, unnecessary heat loss through the piston, the cylinder, and the cylinder head.

Disclosed is an engine for use in a machine. The engine comprises an engine block. A cylinder head is mounted to the engine block. A combustion chamber is formed at least partially by the cylinder head. A piston is slidably disposed in the engine block (108) and configured to reciprocate therein, wherein the piston comprises a bottom surface, an outer surface and a sidewall. The sidewall faces radially outward to mate with a cylinder of the engine. The sidewall contacts the outer surface, the bottom surface and the outer surface forming a portion of the combustion chamber. The bottom surface comprises a convex region being intersected by a longitudinal piston axis defined by the piston, a concave region, and a circumferential edge. The convex region is radially inward of and in contact with the concave region, the concave region is radially inward of and in contact with the circumferential edge, and the circumferential edge is radially inward of and in contact with the outer surface.

The detailed description of the drawings refers to the accompanying figures in which:
- FIG. 1: is an illustration of an engine for use in a machine, the machine being shown as an agricultural tractor,
- FIG. 2: is a perspective view of an example of a piston and a cylinder head, the piston being shown slightly below a top dead center position,
- FIG. 3: is a central cross sectional view of the piston in a top dead center position taken along lines 3-3 of FIG. 2, and
- FIG. 4: is a central cross sectional view of the piston, an intake valve, an exhaust valve, and a fuel plume, the fuel plume being shown during a combustion event.

Like reference numerals in the various drawings indicate like elements.

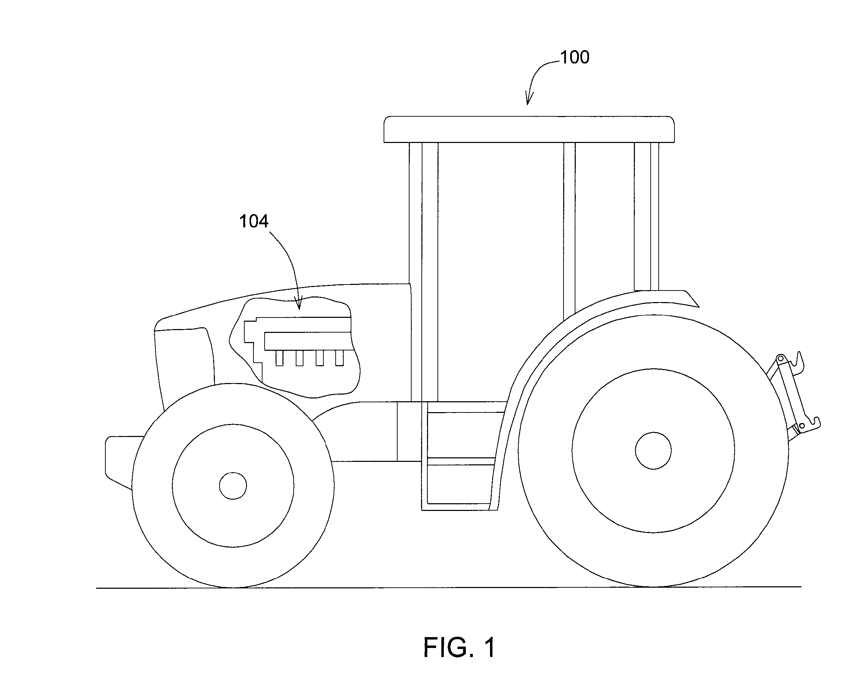

Referring to FIG. 1, there is shown an illustration of an engine 104 for providing power to a variety of machines, including on-highway trucks, construction vehicles, marine vessels, stationary generators, automobiles, agricultural vehicles, and recreational vehicles. In the illustrated embodiment, machine 100 is an agricultural tractor. The engine 104 may be of any size, be of any configuration (e.g., "V," inline, and radial), and have any number of cylinders. The engine 104 may be a diesel engine.

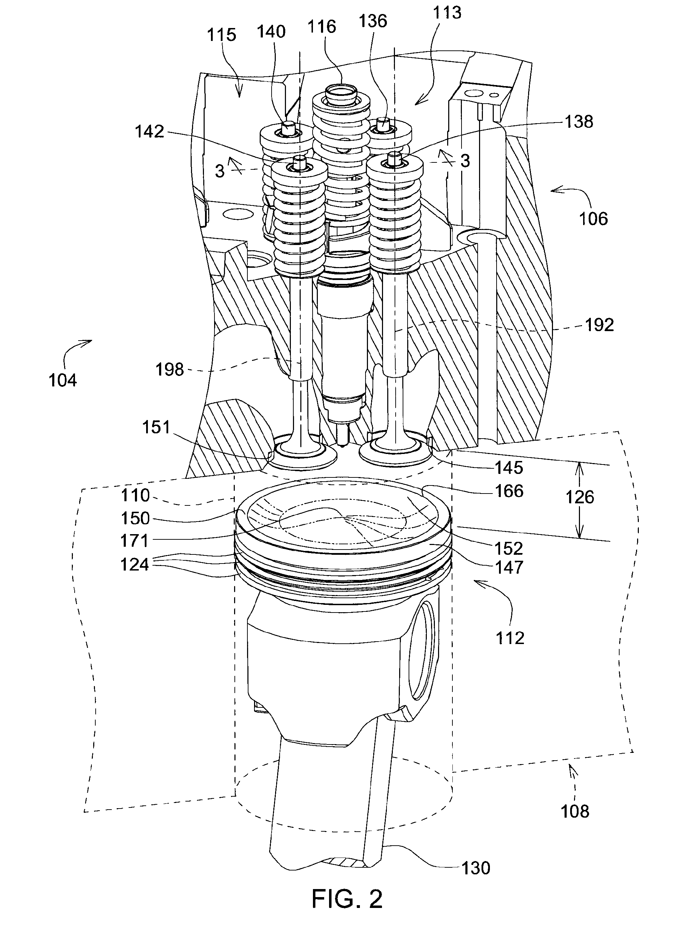

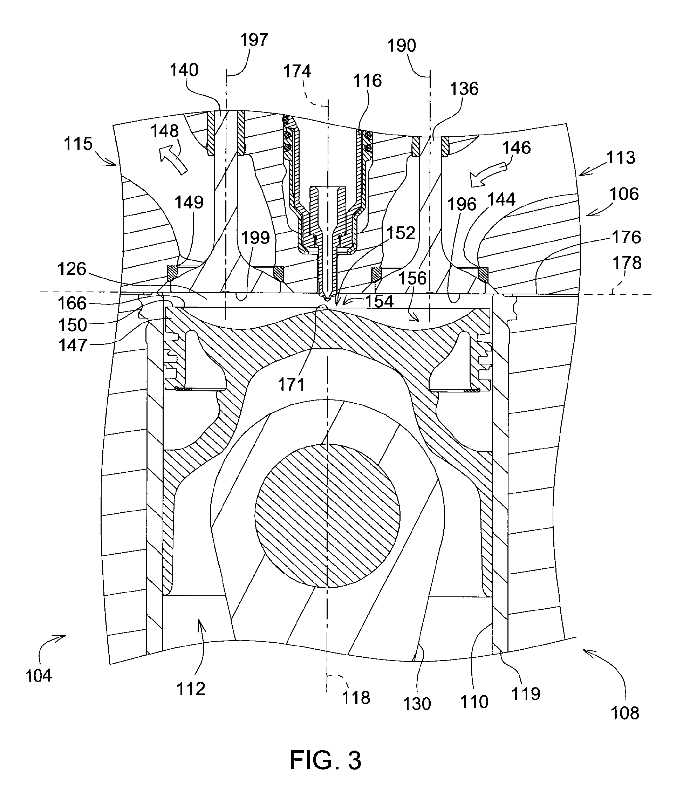

Next, referring to FIGS. 2 and 3, the engine 104 includes an engine block 108, a cylinder head 106, a combustion chamber 126, and a piston 112. The piston 112 is connected through a connecting rod 130 to a crankshaft of the engine 104. Combustion events cause the piston 112 to reciprocate along a rectilinear path within a cylinder 110, the cylinder 110 being partially formed by a sleeve 119, in at least some embodiments. The combustion chamber 126 is formed at the end of the cylinder 110, and is bound at a first end by the cylinder head 106 and at a second end by the top surface of the piston 112. A fuel injection nozzle 116 injects, for example, diesel fuel into the combustion chamber 126.

The engine 104 may include an intake system 113, which includes components for introducing a fresh intake gas in the direction of arrow 146 during intake strokes of the piston 112. Further, the engine 104 includes an exhaust system 115, which has components for directing exhaust gas, from the engine 104 to the atmosphere, in the direction of arrow 148 during exhaust strokes of the piston 112. The exhaust system 115 may include an after treatment system. And in such embodiments, at least some of the exhaust gas flows through the after treatment system, so that it can remove various chemical compounds and particulate emissions present in the exhaust gas.

The piston 112 may be an integral metallic structure formed of a heat resistant alloy. However, the present disclosure contemplates that the piston 112 could be of a variety of other styles, including (but not limited to) an articulated piston, monobloc piston, forged piston, multi-piece piston, and other configurations known to those of ordinary skill in the art. The piston 112 may be formed of at least one of a metallic, intermetallic, ceramic, or composite material, so that the piston 112 can withstand the temperatures and pressures associated with the combustion chamber 126. The piston 112 further includes a plurality of piston ring grooves 124 that face radially outward for mating with the cylinder 110 of the engine 104. The piston ring grooves 124 are configured to receive piston rings therein. The cylinder head 106, which includes an intake valve seat 144, is mounted to the engine block 108. The combustion chamber 126 is formed at least partially by the cylinder 110 and the cylinder head 106.

The piston 112 includes an outer surface 150, a bottom surface 152, and a sidewall 147, arranged such that the outer surface 150 and the bottom surface 152 form a portion of the combustion chamber 126. The sidewall 147 faces radially outward, so as to mate with the cylinder 110. The bottom surface 152 includes a convex region 154, a concave region 156, and a circumferential edge 166. The convex region 154 is intersected by a longitudinal piston axis 118 defined by the piston 112. The convex region 154 is radially inward of and in contact with the concave region 156, the concave region 156 is radially inward of and in contact with the circumferential edge 166, and the circumferential edge 166 is radially inward of and in contact with the outer surface 150. In the illustrated embodiment, the convex region 154 and the circumferential edge 166 are the only convex shaped regions of the bottom surface 152, and the concave region 156 is the only concave shaped region of the bottom surface 152.

Any regions of the bottom surface 152 are misaligned with the direction of the longitudinal piston axis 118, i.e., it does not include vertical regions in alignment with the direction of the longitudinal piston axis 118. A vertical region may affect the combustion events, such that they unnecessarily contact the piston 112 and, therefore, unnecessarily result in heat loss. Further, the outer surface 150 and the bottom surface 152 face axially upward, and the outer surface 150 and the bottom surface 152 may be positioned axially above the piston ring grooves 124. By having such a shallow bottom surface 152, heat loss to the piston 112 from the combustion events is decreased, while fuel efficiency and power is increased.

The convex region 154 and the concave region may both be smooth and round contoured shapes. In some embodiments, the convex region 154 and the concave region 156 may encourage the combustion of, for example, diesel fuel to occur evenly and quickly, which maximizes power distribution across the top of the piston 112, and avoids heat sinks at the piston 112, the engine block 108, and the cylinder head 106.

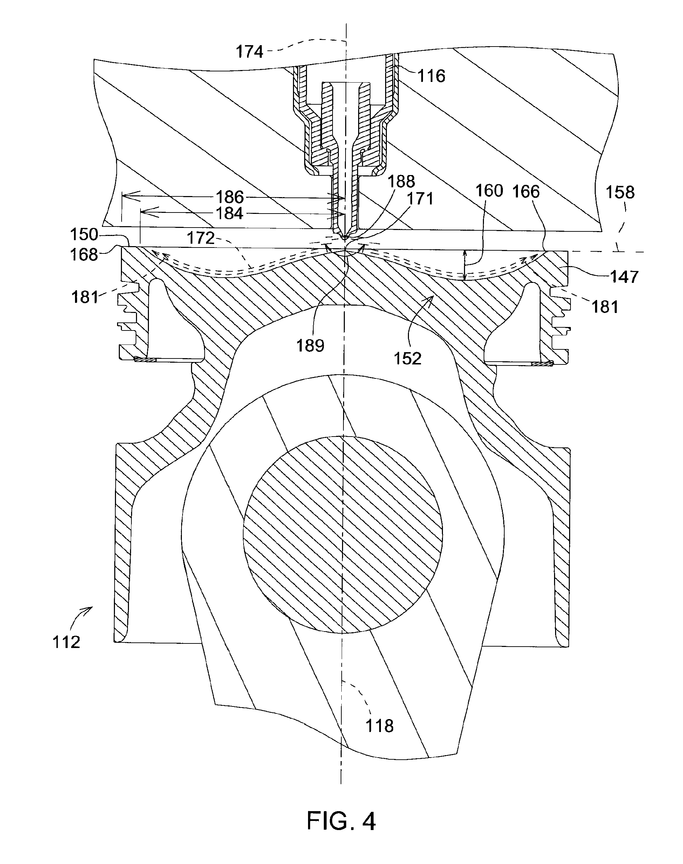

The fuel injection nozzle 116 is positioned in the cylinder head 106 for providing fuel, such as diesel fuel, to the combustion chamber 126. The cylinder head 106 includes a block mounting face 176 defining a block mounting plane 178, while the injection nozzle 116 defines a fuel injection nozzle axis 174 that may be substantially perpendicular to the block mounting plane 178. Further, the injection nozzle 116 includes a plurality of spray apertures 188 that may periodically spray the fuel in a conical pattern measuring between 160° and 175° and, in some embodiments, in a conical pattern measuring between 166° and 170°, as indicated by angle 189 (see FIG. 4). The injection nozzle 116 includes between 10 and 14 spray apertures 188 and specifically, in at least some embodiments, 12 spray apertures 188. In some embodiments, the orientation of the injection nozzle 116 and the conical pattern encourages even combustion of the fuel, so as to maximize power distribution, while minimizing heat waste to the combustion chamber 126.

The engine 104 includes an intake valve 136 that travels, between a fully closed position seated against the intake valve seat 144 and an opened position displaced from the intake valve seat 144, thereby allowing an intake gas to flow through the intake valve seat 144 and into the combustion chamber 126. The intake valve 136 defines an intake axis 190 that may be substantially perpendicular to the block mounting plane 178. An intake face 196 of the intake valve 136 may overlap at least a portion of the outer surface 150 when viewed from a direction perpendicular to the intake face 196. When the intake valve 136 is in the seated position, the intake face 196 may be flush with the block mounting plane 178.

In the embodiment shown, the engine 104 includes a second intake valve 138, traveling between a fully closed position seated against a second intake valve seat 145 and an opened position displaced from the second intake valve seat 145. This allows the intake gas to flow through the second intake valve seat 145 and into the combustion chamber 126. The second intake valve 138 defines a second intake axis 192. The block mounting plane 178 and the second intake axis 192 may be substantially perpendicular relative to one another. Further, the intake axis 190 and the second intake axis 192 may both be radially inward of the outer surface 150 and also radially inward of the circumferential edge 166. When the second intake valve 138 is in the seated position, the intake face thereof may be flush with the block mounting plane 178.

The engine 104 includes an exhaust valve 140, and the cylinder head 106 includes an exhaust valve seat 149. The exhaust valve 140 travels between a fully closed position seated against an exhaust valve seat 149 and an opened position displaced from the exhaust valve seat 149, thereby allowing an exhaust gas to flow out of the combustion chamber 126 and through the exhaust valve seat 149. The exhaust valve 140 defines an exhaust axis 197, and in the illustrated embodiment, the block mounting plane 178 and the exhaust axis 197 are substantially perpendicular relative to one another. An exhaust face 199 of the exhaust valve 140 may overlap at least a portion of the outer surface 150 when viewed from a direction perpendicular to the exhaust face 199. The circumferential edge 166 may limit the fuel from passing across the outer surface 150 during a combustion event. When the exhaust valve 140 is in the seated position, the exhaust face 199 may be flush with the block mounting plane 178.

The engine 104 includes a second exhaust valve 142. The second exhaust valve 142 travels between a fully closed position seated against a second exhaust valve seat 151 and an opened position displaced from the second exhaust valve seat 151, which allows the exhaust gas to flow through the second exhaust valve seat 151 and into the combustion chamber 126. The second exhaust valve 142 defines a second exhaust axis 198. The block mounting plane 178 and the second exhaust axis 198 are substantially perpendicular relative to one another, and the exhaust axis 197 and the second exhaust axis 198 are both radially inward of the outer surface 150 relative to the longitudinal piston axis 118. When the second exhaust valve 142 is in the seated position, the exhaust face thereof may be flush with the block mounting plane 178.

Such orientations of the intake valves 136, 138 and exhaust valves 140, 142 may maximize power and, simultaneously, minimize heat waste. Specifically, in some embodiments, the orientation of the intake valves 136, 138, for example, encourages even combustion of the fuel over the bottom surface 152 of the piston 112. And the orientation of the exhaust valves 140, 142, for example, encourages even exhaust of the exhaust gas, so as to minimize heat waste via heat loss to the cylinder 110, engine block 108, and cylinder head 106, among other things.

Next, referring further to FIG. 4, a radius 184 of the bottom surface 152 is measured perpendicularly from the longitudinal piston axis 118 to where the circumferential edge 166 and the outer surface 150 are in contact, and a radius 186 of the piston 112 is measured perpendicularly from the longitudinal piston axis 118 to an outside circumferential edge 168 of the outer surface 150. The radius 184 of the bottom surface 152 may be between 85% and 97% of the radius 186 of the piston 112. A maximum depth 160 is measured perpendicularly from a plane 158, defined by the outer surface 150, to a lowest point of the convex region 154. The maximum depth 160 of the convex region 154 may be between 7% and 17% of the radius 186 of the piston 112. The outer surface 150 and a peak 171 of the convex region 154 may be substantially level relative to one another, as viewed in a central cross sectional view of the piston 112. And, additionally, the piston 112 may be symmetric about the longitudinal piston axis 118. In some embodiments, this combination - a large radius 184 of the bottom surface 152, a small maximum depth 160, and a symmetric design - results in very fast combustion with minimal contact with the combustion chamber 126.

Also referring to FIG. 4, a fuel plume 172 is shown being injected by the injection nozzle 116 towards the peak 171, and as a result, the fuel plume 172 traces the bottom surface 152, as indicated by arrows 181. This configuration and appropriate timing of the fuel injection may largely prevent the fuel plume 172 from spilling over onto the outer surface 150 of the piston 112 and hitting the cylinder 110. The overall result may be a reduction of the discharge of particulate emissions, and a reduction in the passage of the fuel and soot into the oil of the engine 104. The plurality of spray apertures 188 may periodically spray the fuel in a conical pattern measuring between 160° and 175° and, in some embodiments, in a pattern measuring between 166° and 170°. The injection nozzle 116 includes between 10 and 14 spray apertures 188, and specifically, in some embodiments, 12 spray apertures 188. In some embodiments, the orientation of the fuel plume 172 and the plurality of spray apertures 188 encourages even, and fast, combustion of the fuel. In combination with the shape of the piston 112, the fuel plume 172 tends to maximize power, but with a minimal amount of contact with the combustion chamber 126, resulting in a minimal amount of heat loss therein.

## Claims

1. An engine for use in a machine, the engine (104) comprising an engine block (108); a cylinder head (106) mounted to the engine block (108); a combustion chamber (126) formed at least partially by the cylinder head (106); and a piston (112) slidably disposed in the engine block (108) and configured to reciprocate therein, the piston (112) comprising a bottom surface (152), an outer surface (150) and a sidewall (147), the sidewall (147) facing radially outward to mate with a cylinder (110) of the engine (104), the sidewall (147) contacting the outer surface (150), the bottom surface (152) and the outer surface (150) forming a portion of the combustion chamber (126), the bottom surface (152) comprising a convex region (154) being intersected by a longitudinal piston axis (118) defined by the piston (112); a concave region (156); and a circumferential edge (166), the convex region (154) being radially inward of and in contact with the concave region (156), the concave region (156) being radially inward of and in contact with the circumferential edge (166), and the circumferential edge (166) being radially inward of and in contact with the outer surface (150).

2. The engine according to claim 1, **characterized in that** the outer surface (150) and a peak (171) of the convex region (154) are level relative to one another along a plane (158) perpendicular to the longitudinal piston axis (118).

3. The engine according to claim 1 or 2, **characterized in that** a radius (186) of the piston (112) is measured perpendicularly from the longitudinal piston axis (118) to an outside circumferential edge (168) of the outer surface (150), a radius (184) of the bottom surface (150) is measured perpendicularly from the longitudinal piston axis (118) to where the circumferential edge (166) and the outer surface (150) are in contact, the radius (184) of the bottom surface (150) is between 85% and 97% of the radius (186) of the piston (112).

4. The engine according to at least one of claims 1 to 3, **characterized by** further comprising a fuel injection nozzle (116) positioned in the cylinder head (106) and configured to provide fuel within the combustion chamber (126), the cylinder head (106) comprising a block mounting face (176) defining a block mounting plane (178), the fuel injection nozzle (116) defining a fuel injection nozzle axis (174), and the block mounting plane (178) and the fuel injection nozzle axis (174) being substantially perpendicular to one another.

5. The engine according to at least one of claims 1 to 4, **characterized by** further comprising a fuel injection nozzle (116) positioned in the cylinder head (106) and configured to provide an ignition site within the combustion chamber (126), the fuel injection nozzle (116) comprising a plurality of spray apertures (188), the plurality of spray apertures (188) being configured to spray fuel in a conical pattern measuring between 160° and 175°, and the fuel injection nozzle (116) comprising between 10 and 14 spray apertures (188).

6. The engine according to at least one of claims 1 to 5, **characterized in that** the outer surface (150) is a flat outer surface.

7. The engine according to at least one of claims 1 to 6, **characterized in that** the outer surface (150) is an annular surface.

8. The engine according to at least one of claims 1 to 7, **characterized in that** the convex region (154) is a smooth and round contoured shape, and the concave region (156) is a smooth and round contoured shape.

9. The engine according to at least one of claims 1 to 8, **characterized by** an intake valve (136) configured to travel between a fully closed position seated against an intake valve seat (144) and an opened position displaced from the intake valve seat (144) allowing an intake gas to flow through the intake valve seat (144) and into the combustion chamber (126), the cylinder head (106) comprising a block mounting face (176) defining a block mounting plane (178), and the intake valve (136) defining an intake axis (190), and the block mounting plane (178) and the intake axis (190) being substantially perpendicular relative to one another; and a second intake valve (138) configured to travel between a fully closed position seated against a second intake valve seat (145) and an opened position displaced from the second intake valve seat (145) allowing the intake gas to flow through the second intake valve seat (145) and into the combustion chamber (126), the second intake valve (138) defining a second intake axis (192), the block mounting plane (178) and the second intake axis (192) being substantially perpendicular relative to one another, and the intake axis (190) and the second intake axis (192) both being radially inward of the outer surface (150).

10. The engine according to claim 9, **characterized in that** an intake face (196) of the intake valve (136) overlaps at least a portion of the outer surface (150), and an intake face of the second intake valve (138) overlaps at least a portion of the outer surface (150) in a direction perpendicular to the intake faces (196) of the intake valve (136) and second intake valve (138).

11. The engine according to claim 10, **characterized by** further comprising an exhaust valve (140) configured to travel between a fully closed position seated against an exhaust valve seat (149) and an opened position displaced from the exhaust valve seat (149) allowing an exhaust gas to flow out of the combustion chamber (126) and through the exhaust valve seat (149), the exhaust valve (140) defining an exhaust axis (197), the block mounting plane (178) and the exhaust axis (197) being substantially perpendicular relative to one another, and the circumferential edge (166) limiting fuel from passing across the outer surface (150) during a combustion event; and a second exhaust valve (142) configured to travel between a fully closed position seated against a second exhaust valve seat (151) and an opened position displaced from the second exhaust valve seat (151) allowing the exhaust gas to flow through the second exhaust valve seat (151) and into the combustion chamber (126), the second exhaust valve (142) defining a second exhaust axis (198), the block mounting plane (178) and the second exhaust axis (198) being substantially perpendicular relative to one another, and the exhaust axis (197) and the second exhaust axis (198) being both radially inward of the outer surface (150).

12. The engine according to claim 11, **characterized in that** an exhaust face (199) of the exhaust valve (140) overlaps at least a portion of the outer surface (150), and an exhaust face (199) of the second exhaust valve (142) overlaps at least a portion of the outer surface (150).

13. A piston for an engine, the piston (112) comprising a bottom surface (152) and an outer surface (150) and a sidewall (147), the sidewall (147) facing radially outward to mate with a cylinder (110) of the engine (104), the sidewall (147) contacting the outer surface (150), the bottom surface (152) comprising a convex region (154) being intersected by a longitudinal piston axis (118) defined by the piston (112); a concave region (156); and a circumferential edge (166), the convex region (156) being radially inward of and in contact with the concave region (156), the concave region (156) being radially inward of and in contact with the circumferential edge (166), and the circumferential edge (166) being radially inward of and in contact with the outer surface (150).
